# EUROPEAN PATENT APPLICATION

(11) **EP 2 857 369 A1**
(43) Date of publication of application: **08.04.2015**
(21) Application number: 12878118.4
(22) Date of filing: 28.05.2012
(51) Int. Cl.: C03C 13/06

(54) **Si-Mg-BASED INORGANIC FIBER AND COMPOSITION CONTAINING SAME**

(71) Applicant: Nichias Corporation, Tokyo 104-8555 (JP)
(72) Inventor: IWATA, Koji, Tokyo 104-8555 (JP); KITAHARA, Hideki, Tokyo 104-8555 (JP); MOCHIDA, Takahito, Tokyo 104-8555 (JP); YONAIYAMA, Ken, Tokyo 104-8555 (JP); ISHIKAWA, Yoichi, Tokyo 104-8555 (JP); MIKI, Tatsuro, Tokyo 104-8555 (JP)
(74) Representative: Schmitz, Joseph
(86) International application number: PCT/JP2012/003463
(87) International publication number: WO 2013/179330

(57) **Abstract**

A composition for inorganic fibers having the following composition ratio and including no solvent: SiO₂ 1.0 to 54.5 wt%; Al₂O₃ less than 58.0 wt%; MgO 1.0 to 69.0 wt%; CaO 6.0 wt% or less; and the total of SiO₂, Al₂O₃ and MgO exceeding 94.0 wt%.

## Description

### Technical Field

The invention relates to Si-Mg-based inorganic fibers having excellent biosolubility and a composition for obtaining the inorganic fibers.

### Background Art

Due to lightness in weight, easiness in handling and excellent heat resistance, asbestos has been used as a heat-resistant sealing material, for example. However, since asbestos causes a disorder in the lung when inhaled by a human body, the use thereof is prohibited, and ceramic fibers or the like are used instead of asbestos. Ceramic fibers or the like have heat resistance as high as that of asbestos, and are believed to pose no health problems as long as they are handled appropriately. However, there has been a trend for seeking a further degree of safety. Under such circumstances, with an aim of realizing biosoluble inorganic fibers that do not cause or hardly cause problems even though inhaled by a human body, various biosoluble fibers have been developed (Patent Documents 1 and 2, for example).

Most of biosoluble fibers that have been commercially available so far have a high solubility in physiological saline with a pH of 7.4. On the other hand, it is also known that fibers inhaled by the lung are caught by a macropharge. In addition, it is also known that the pH around a macropharge is 4.5. Therefore, it is expected that the fibers having a high solubility in physiological saline with a pH of 4.5 are dissolved and decomposed in the lung.

Conventional inorganic fibers are secondarily processed into a shaped or unshaped product together with various binders and various additives as in the case of asbestos, and are used as a joint material in a heat-treatment apparatus, a furnace of an industrial kiln and an incinator; a joint material that fills a gap of refractory tiles, insulating blocks, shells and refractory mortars; a sealing material, a packing material, a heat insulating material or the like. Therefore, in many cases, they are exposed to high temperatures when used, and hence, they preferably have heat resistance.

Further, alumina is often used in elements in a furnace. Therefore, there are problems that fibers contained in a secondary-processed product react with this alumina, whereby the secondary-processed product or an element is fused or molten.

### Related Art Document

### Patent Documents

Patent Document 1: Japan Patent No. 3753416
Patent Document 2: JP-T-2005-514318

### Summary of the Invention

An object of the invention is to provide inorganic fibers having a high solubility in physiological saline with a pH of 4.5 and a composition for obtaining the inorganic fibers.

According to the invention, the following composition for inorganic fibers, inorganic fibers, or the like are provided.
1. A composition for inorganic fibers, and inorganic fibers having the following composition ratio and comprising no solvent:

| | |
|---|---|
| SiO₂ | 1.0 to 54.5 wt%; |
| Al₂O₃ | less than 58.0 wt%; |
| MgO | 1.0 to 69.0 wt%; |
| CaO | 6.0 wt% or less; and |

the total of SiO₂, Al₂O₃ and MgO exceeding 94.0 wt%.
2. A method for producing inorganic fibers, wherein the composition for inorganic fibers according to 1 that is molten is formed into fibers.
3. Inorganic fibers obtained by the method for producing inorganic fibers according to 2.
4. A composition for inorganic fibers, and inorganic fibers having the following composition ratio 1 or composition ratio 2:
[Composition ratio 1]

| | |
|---|---|
| SiO₂ | 1.0 to 21.5 wt%; |
| Al₂O₃ | 24.0 wt% or more and less than 58.0 wt%; |
| MgO | 1.0 to 57.0 wt%; and |
| CaO | less than 7.4 wt% |

[Composition ratio 2]

| | |
|---|---|
| SiO₂ | 1.0 to 22.0 wt%; |
| Al₂O₃ | 58.0 wt% or more and 79.0 wt% or less; |
| MgO | 19.2 to 41.0 wt%; and |
| CaO | less than 7.4 wt% |

5. The composition for inorganic fibers and the inorganic fibers according to 4, wherein the total of SiO₂, Al₂O₃ and MgO is 85 wt% or more.
6. A composition for inorganic fibers and inorganic fibers having the following composition ratio 3 or composition ratio 4:
[Composition ratio 3]

| | |
|---|---|
| SiO₂ | 1.0 to 54.5 wt%; |
| Al₂O₃ | less than 58.0 wt%; |
| MgO | 3.0 to 69.0 wt%; |
| CaO | 6.0 wt% or less; and |

the total of SiO₂, Al₂O₃ and MgO exceeding 94.0 wt%.
[Composition ratio 4]

| | |
|---|---|
| SiO₂ | 30.0 to 41.0 wt%; |
| Al₂O₃ | 58.0 to 69.0 wt%; |
| MgO | 1.0 to 12.0 wt%; |
| CaO | 6.0 wt% or less; and |

the total of SiO₂, Al₂O₃ and MgO exceeding 94.0 wt%.
7. The composition for inorganic fibers and the inorganic fibers according to 6, wherein, in composition ratio 3, SiO₂, Al₂O₃ and MgO are included in the following amounts:

| | |
|---|---|
| SiO₂ | 14.0 to 51.0 wt%; |
| Al₂O₃ | 0.0 to 39.0 wt%; and |
| MgO | 42.0 to 59.0 wt% |

8. The composition for inorganic fibers and the inorganic fibers according to 6, wherein, in composition ratio 3, SiO₂, Al₂O₃ and MgO are included in the following amounts:

| | |
|---|---|
| SiO₂ | 39.0 to 54.5 wt%; |
| Al₂O₃ | 28.0 to 48.0 wt%; and |
| MgO | 3.0 to 23.0 wt% |

9. The composition for inorganic fibers and the inorganic fibers according to any of 1 and 4 to 8, wherein Na₂O is included in an amount of 2.0 wt% or less.
10. Inorganic fibers obtained from the composition for inorganic fibers according to any of 4 to 9.
11. A shaped product or an unshaped product obtained by using the inorganic fibers according to 3 or 10.

According to the invention, it is possible to provide inorganic fibers having a high solubility in physiological saline with a pH of 4.5 and a composition for obtaining the inorganic fibers.

### Brief Description of the Drawings

FIG. 1 is a view showing the composition ratio of the fibers prepared in Example 18;
FIG. 2 is an SEM photograph of the fibers prepared in Example 18;
FIG. 3A is an XRD chart of Sample A and Fiber A prepared in Example 19, before heating;
FIG. 3B is an XRD chart of Sample A and Fiber A prepared in Example 19, after heating;
FIG. 4 is a view showing the relationship of the amount of CaO, Na₂O and Fe₂O₃ and the volume shrinkage measured in Experiment 1; and
FIG. 5 is a view showing the relationship of the amount of Na₂O and the volume shrinkage measured in Experiment 1.

### Mode for Carrying out the Invention

The composition for inorganic fibers of the invention has the following composition ratio:

| | |
|---|---|
| SiO₂ | 1.0 to 54.5 wt%; |
| Al₂O₃ | less than 58.0 wt%; |
| MgO | 1.0 to 69.0 wt%; |
| CaO | 6.0 wt% or less; and |

the total of SiO₂ and Al₂O₃ and MgO exceeding 94.0%.

The above composition ratio may be the following composition ratio.

| | |
|---|---|
| SiO₂ | 4.0 to 54.5 wt%; |
| Al₂O₃ | less than 58.0 wt%; |
| MgO | 4.0 to 64.0 wt%; and |
| CaO | less than 6.0 wt% |

The composition for inorganic fibers of the invention has any of the following composition ratios 1 to 4:
[Composition ratio 1]

| | |
|---|---|
| SiO₂ | 1.0 to 21.5 wt%; |
| Al₂O₃ | 24.0 wt% or more and less than 58.0 wt%; |
| MgO | 1.0 to 57.0 wt%; and |
| CaO | less than 7.4 wt% |

[Composition ratio 2]

| | |
|---|---|
| SiO₂ | 1.0 to 22.0 wt%; |
| Al₂O₃ | 58.0 wt% or more and 79.0 wt% or less; |
| MgO | 19.2 to 41.0 wt%; and |
| CaO | less than 7.4 wt% |

[Composition ratio 3]

| | |
|---|---|
| SiO₂ | 1.0 to 54.5 wt%; |
| Al₂O₃ | less than 58.0 wt%; |
| MgO | 3.0 to 69.0 wt%; |
| CaO | 6.0 wt% or less; and |

the total of SiO₂, Al₂O₃ and MgO exceeding 94.0 wt%.
[Composition ratio 4]

| | |
|---|---|
| SiO₂ | 30.0 to 41.0 wt%; |
| Al₂O₃ | 58.0 to 69.0 wt%; |
| MgO | 1.0 to 12.0 wt%; |
| CaO | 6.0 wt% or less; and |

the total of SiO₂, Al₂O₃ and MgO exceeding 94.0 wt%.

The composition ratio 1 may be the following composition ratio.

| | |
|---|---|
| SiO₂ | 1.0 to 21.5 wt%; |
| Al₂O₃ | 29.0 wt% or more and less than 58.0 wt%; |
| MgO | 4.0 to 52.0 wt%; and |
| CaO | less than 6.0 wt% |

The composition ratio 3 may be the following composition ratio.

| | |
|---|---|
| SiO₂ | 6.0 to 54.5 wt%; |
| Al₂O₃ | less than 58.0 wt%; |
| MgO | 8.0 to 64.0 wt%; and |
| CaO | less than 6.0 wt% |

In respect of biosolubility and resistance to alumina reactivity, the following composition ratio can preferably be given.

| | |
|---|---|
| SiO₂ | 14.0 to 24.0 wt%; |
| Al₂O₃ | 29.0 to 39.0 wt%; and |
| MgO | 42.0 to 52.0 wt% |

In respect of biosolubility and resistance to alumina reactivity, the following composition ratio can preferably be given.

| | |
|---|---|
| SiO₂ | 39.0 to 54.5 wt%; |
| Al₂O₃ | 28.0 to 48.0 wt%; and |
| MgO | 3.0 to 23.0 wt% |

The above-mentioned composition may be the following composition ratio.

| | |
|---|---|
| SiO₂ | 44.0 to 54.0 wt%; |
| Al₂O₃ | 33.0 to 43.0 wt%; and |
| MgO | 8.0 to 18.0 wt% |

Further, in respect of biosolubility and resistance to alumina reactivity, the following composition ratio can preferably be given.

| | |
|---|---|
| SiO₂ | 17.0 to 21.5 wt%; |
| Al₂O₃ | 63.0 wt% or more and less than 58.0 wt%; and |
| MgO | 5.0 to 15.0 wt% |

Further, in respect of biosolubility and resistance to alumina reactivity, the following composition ratio can preferably be given.

| | |
|---|---|
| SiO₂ | 36.0 to 54.5 wt%; |
| Al₂O₃ | 0.0 to 10.0 wt%; and |
| MgO | 44.0 to 64.0 wt% |

The above-mentioned composition may have the following composition ratio.

| | |
|---|---|
| SiO₂ | 41.0 to 51.0 wt%; |
| Al₂O₃ | 0.0 to 3.0 wt%; and |
| MgO | 49.0 to 59.0 wt% |

Further, in respect of biosolubility and resistance to alumina reactivity, the following composition ratio can preferably be given.

| | |
|---|---|
| SiO₂ | 6.0 to 16.0 wt%; |
| Al₂O₃ | 46.0 to 56.0 wt%; and |
| MgO | 33.0 to 43.0 wt% |

Further, in respect of biosolubility and resistance to alumina reactivity, the following composition ratio can preferably be given.

| | |
|---|---|
| SiO₂ | 25.0 to 35.0 wt%; |
| Al₂O₃ | 6.0 to 16.0 wt%; and |
| MgO | 54.0 to 64.0 wt% |

The following is possible in correspondence with the above-mentioned composition ratios.

SiO₂ may be 5.0 wt% or more, 8.0 wt% or more, or 10.0 wt% or more.
SiO₂ may be 53.0 wt% or less or less than 39.0 wt%.
Al₂O₃ may be 3.0 wt% or more, 5.0 wt% or more, or 8.0 wt% or more.
Al₂O₃ may be 74.0 wt% or less.
MgO may exceed 1.0 wt%, 5.0 wt% or more, 7.0 wt% or more, 20.0 wt% or more, or 21.0 wt% or more.
MgO may be 63.0 wt% or less or 60.0 wt% or less.
CaO may be 7.0 wt% or less, 5.0 wt% or less, 2 wt% or less, or 1 wt% or less.

In respect of biosolubility, MgO is preferably 30 wt% or more, 36.5 wt% or more or 38.0 wt% or more. Further, in respect of biosolubility, SiO₂ is preferably 20.0 wt% or more, or 26.0 wt% or more. In respect of resistance to alumina reactivity, Al₂O₃ is preferably 34.0 wt% or more, 43.0 wt% or more, or 56.0 wt% or more. In respect of resistance to alumina reactivity, MgO is preferably 24.0 wt% or less, 23.8 wt% or less, 21.5 wt% or less, or 21.0 wt% or less.

The total of SiO₂, Al₂O₃ and MgO may be 85 wt% or more, 90 wt% or more, 93 wt% or more, 95 wt% or more, 98 wt% or more, 99 wt% or more, or 100 wt%.

The remainder other than the specific components is oxides of other elements or impurities.

The composition of the invention may or may not comprise an oxide of an element selected from Sc, La, Ce, Pr, Nd, Sm Eu, Gd, Tb, Dy, Ho, Er, Tm, Yb, Lu, Y or a mixture of these. The amount of these oxides may be 10 wt% or less, 5.0 wt% or less, 3 wt% or less, 2 wt% or less, 1.0 wt% or less, 0.5 wt% or less, 0.2 wt% or less, or 0.1 wt% or less.

Each of alkali metal oxides (K₂O, Na₂O, Li₂O or the like) may or may not be contained, and the content of each oxide or the total content of the oxides is 10 wt% or less, 5.0 wt% or less, 3 wt% or less, 2 wt% or less, 1.0 wt% or less, 0.5 wt% or less, 0.2 wt% or less, or 0.1 wt% or less. The content of the alkali metal oxides may be less than 5 mol%. The amount of potassium oxide may be less than 12 mol% or less than 5 mol%.

Each of TiO₂, ZnO, B₂O₃, P₂O₅, CaO, SrO, BaO, Cr₂O₃, ZrO₂, Fe₂O₃ may or may not be contained, and the content of each oxide is 10 wt% or less, 5.0 wt% or less, 3 wt% or less, 2 wt% or less, 1.0 wt% or less, 0.5 wt% or less, 0.2 wt% or less, or 0.1 wt% or less.

In respect of heat shrinkage, as for the amount of each of Na₂O and Fe₂O₃ (in particular, Na₂O), the smaller, the better. As for the amount of CaO, if it is small, a smaller amount is better. For example, the total of CaO, Na₂O and Fe₂O₃ may be 2 wt% or less, 1 wt% or less, or 0.5 wt% or less.

The amount of each component in the above composition may be arbitrarily combined.

Normally, the composition of the invention does not contain the following materials. If contained, the each amount thereof is 1.0 wt% or less, 0.5 wt% or less, 0.2 wt% or less, or 0.1 wt% or less:

Germanium oxide, tellurium oxide, vanadium oxide, sulfur oxide, phosphorous compounds, tin, cobalt, manganese oxide, fluorides and copper oxide.

Inorganic fibers can be obtained from the composition of the invention.

Inorganic fibers can be produced by a known method such as a melting method and a sol-gel method. In respect of a low production cost, a melting method is preferable. In the melting method, by a normal process, a melt of a raw material is produced, and the melt is then formed into fibers. No solvent is contained. For example, inorganic fibers can be produced by a spinning method in which dissolved raw materials are flown to a wheel that is rotated at a high speed or by a blow method in which the dissolved raw materials are formed into fibers by exposing to compressed air, and the like.

The fibers may or may not be covered by a known coating material.

The composition of the fibers of the invention has the same composition ratio as that of the raw materials, and due to the above-mentioned composition ratio, they exhibit excellent solubility in physiological saline with a pH of 4.5.

The solubility in physiological saline with a pH of 4.5 is preferably 3.5 mg/g or more, more preferably 5.0 mg/g or more, and further preferably 6.3 mg/g or more as measured by the measurement method in the Examples.

The solubility of the fibers can also be measured by the following method.

The fibers are placed on a membrane filter. On the fibers, physiological saline with a pH of 4.5 is dripped by means of a micro-pump. The filtrate that has passed the fibers and the filter is collected in a container. The filtrate thus collected is taken out after the lapse of 24, 48 hours, and eluted components are quantified by means of an ICP emission spectrometry, whereby the solubility and the constant of dissolution rate are calculated. Measurement elements can be three major elements; Al, Ca and Mg, for example. Further, the fiber diameter measured may be converted to the constant of dissolution rate (unit: ng/cm²·h) that is the amount of elution per unit surface area and per unit time.

It is preferred that the fibers of the invention have low alumina reactivity. As for the alumina reactivity, in the measurement in the Examples, it is preferred that the fibers be not adhered to alumina, although they leave marks on alumina. Further preferably, the fibers of the invention are not adhered to and leave no marks on alumina.

The fibers of the invention preferably have heat resistance at a temperature of 800°C or more, 1000°C or more, 1100°C or more, 1200°C or more, 1300°C or more, and 1400°C or more. Specifically, a volume shrinkage (%) that is obtained by heating a cylindrical sample (diameter: about 7 mm, height: about 15 mm) at a specific temperature of 800 to 1400°C for 8 hours is 40% or less at 1400 °C-8 hours, preferably 30% or less, further preferably 23% or less, and most preferably 15% or less. The volume shrinkage is 40% or less preferably 30% or less, further preferably 23% or less, and most preferably 15% or less at 1300°C-8 hours. The volume shrinkage is 40% or less, preferably 30% or less, further preferably 23% or less, and most preferably 15% or less at 1200°C-8 hours. The volume shrinkage is 40% or less, preferably 30% or less, further preferably 23% or more, and most preferably 15% or less at 1100°C-8 hours. The volume shrinkage is 40% or less, preferably 30% or less, further preferably 23% or less, and most preferably 15% or less at 1000°C-8 hours. The volume shrinkage is 40% or less, preferably 30% or less, further preferably 23% or less, and most preferably 15% or less at 800 °C-8 hours.

The heat shrinkage of the fibers can be measured before and after the firing at 1100°C and 1260°C for 24 hours after producing a blanket from the fibers. The tensile strength can be measured by a universal tester.

Further, since the fibers of the invention have few kinds of essential components, the number of blending steps is reduced, whereby the cost is decreased. Further, due to a small number of types of components that require delicate adjustment of the amount, difficultly in production is alleviated.

From the fibers of the invention, a shaped product such as a bulk, a blanket, a block, or a board, a mold, paper, a felt or the like that are produced by using a solvent such as water, can be obtained. Also, an unshaped product (mastic, caster, coating materials or the like) that is produced by using a solvent such as water can be obtained.

### EXAMPLES

### Examples 1 to 17 and Comparative Example 1

The composition ratios of the fibers shown in Table 1 were examined as follows.

First, the raw materials were mixed such that the composition shown in Table 1 was attained, and the mixture thus obtained was subjected to press molding to obtain a molded product. This molded product was molten by heating, followed by quenching. The resulting product was pulverized to obtain samples. Evaluation was conducted by using these samples. The results are shown in Table 1.

### (1) Biosolubility

1 g of the sample was put in a 300 mL-conical flask accommodating 150 ml of physiological saline with a pH of 4.5. This flask was placed in an incubator of 37°C, and a horizontal vibration (120 rpm) was continuously applied for 2.5 hours. Thereafter, the amount (mg) of each element contained in a filtrate obtained by filtration was measured by an ICP emission spectrometry apparatus, and the total contents of each element was taken as the elution amount (mg/sample 1 g).

### (2) Alumina reactivity

The sample was shaped to obtain a cylindrical sample having a diameter of about 7 mm and a thickness of about 5 mm. This cylindrical sample was put on an alumina plate, heated at 1400°C for 8 hours, and examined for the occurrence of adhesion or melting. When the cylindrical sample was molten, the fibers were evaluated as 4. When the cylindrical sample was adhered, the fibers were evaluated as 3. When the cylindrical sample was not adhered, but marks were left, the fibers were evaluated as 2. When the cylindrical sample was not adhered and no marks were left, the fibers were evaluated as 1.

### Comparative Example 2

Evaluation was conducted in the same manner as in Example 1 for ceramic fibers comprising 47 mass% of SiO₂ and 52 mass% of Al₂O₃ (conventional heat-resistant inorganic fibers). The results are shown in Table 1.

**Table 1**

| | | Composition ratio (wt%) | | | | | | | | Elution amount (mg/sample, g) | Resistance to reaction with alumina |
|---|---|---|---|---|---|---|---|---|---|---|---|
| | | SiO₂ | Al₂O₃ | MgO | CaO | SrO | Na₂O | K₂O | FeO₃ | pH4.5 | 1400°C-8h |
| Examples | 1 | 41.84 | 43.19 | 14.89 | 0.04 | | | | 0.04 | 4.4 | 1 |
| | 2 | 26.90 | 42.74 | 30.27 | | 0.05 | | | 0.04 | 8.3 | 3 |
| | 3 | 49.15 | 38.10 | 12.70 | | | | 0.04 | 0.00 | 6.5 | 1 |
| | 4 | 32.01 | 28.49 | 39.49 | | | | | | 13.8 | 3 |
| | 5 | 45.54 | 0.08 | 54.34 | | | | | 0.03 | 16.9 | 2 |
| | 6 | 52.07 | 19.44 | 28.49 | | | | | | 5.1 | 4 |
| | 7 | 28.21 | 47.97 | 23.82 | | | | | | 4.6 | 2 |
| | 8 | 18.71 | 34.16 | 47.09 | | | | | 0.04 | 9.0 | 1 |
| | 9 | 37.03 | 17.17 | 45.78 | | 0.02 | | | | 12.8 | 1 |
| | 10 | 19.69 | 58.87 | 21.36 | 0.04 | 0.01 | | | 0.03 | 3.2 | 1 |
| | 11 | 26.36 | 56.52 | 16.87 | | | 0.23 | | 0.03 | 5.3 | 1 |
| | 12 | 34.71 | 49.69 | 15.56 | | | | | 0.04 | 6.3 | 1 |
| | 13 | 10.78 | 50.99 | 38.17 | | | | | 0.06 | 14.8 | 2 |
| | 14 | 44.03 | 8.97 | 46.95 | | | | | 0.05 | 15.0 | 4 |
| | 15 | 44.71 | 19.03 | 36.26 | | | | | | 6.3 | 4 |
| | 16 | 45.42 | 29.04 | 25.44 | 0.05 | | | | 0.04 | 5.8 | 4 |
| | 17 | 30.07 | 11.32 | 58.58 | | | | | 0.04 | 16.4 | 1 |
| Com. Ex. | 1 | 65.07 | 20.56 | 14.33 | | | | | 0.04 | 1.8 | 4 |
| | 2 | 47.23 | 52.72 | | | | | | 0.06 | 0.8 | 1 |

### Example 18

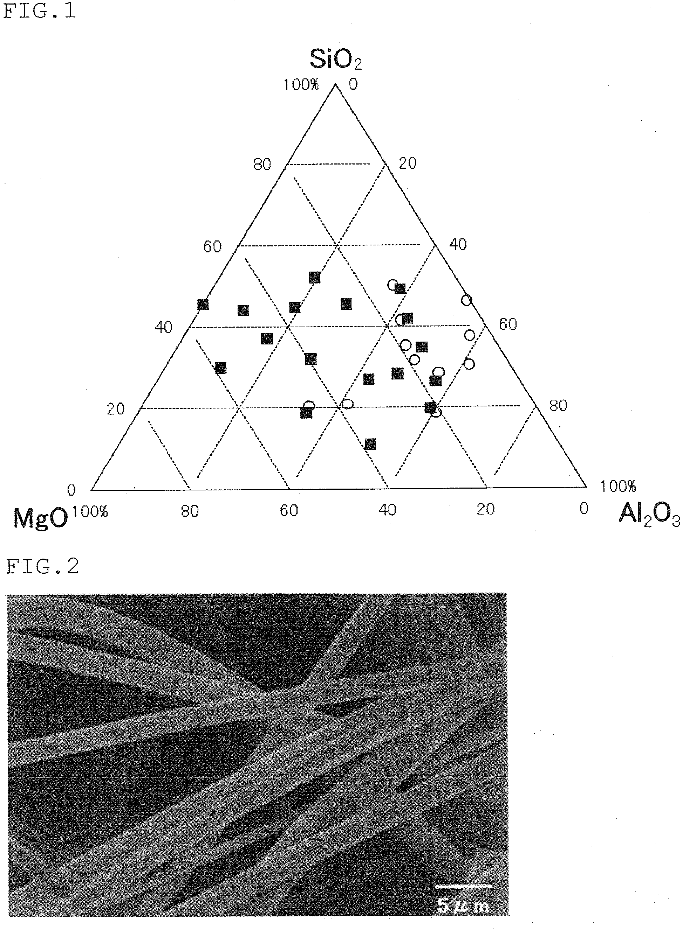

The composition ratios of SiO₂, Al₂O₃ and MgO is the composition ratios indicated by o in the ternary diagram of FIG. 1. As for CaO, the fibers were produced by a melting method from a composition for inorganic fibers having a CaO content of 2 wt%. The black squares in the digram indicate those produced in Examples 1 to 17.

The quality of the fibers were excellent or permissible. An SEM photograph of the resulting fibers (SiO₂: 44.1 wt%, Al₂O₃: 39.9 wt%, MgO: 15.4 wt%) is shown in FIG. 2.

### Example 19

(1) Sample A having a composition ratio shown in Table 2 was prepared by the method of Example 1. Fibers A having a composition ratio shown in Table 2 were parepared by the method of Example 18.

For Sample A and Fibers A, biosolublity and alumina reactivity were evaluated in the same manner as in Example 1. Heat resistance was evaluated by the following method. The results are shown in Table 2. The properties of Sample A and those of Fiber A were almost the same.

### (Heat resistance)

Sample A and Fiber A were shaped, thereby to obtain a cylindrical sample having a diameter of about 7 mm and a height of about 15 mm. This cylindrical sample was heated at 1400°C for 8 hours, and the volume shrinkage was obtained.

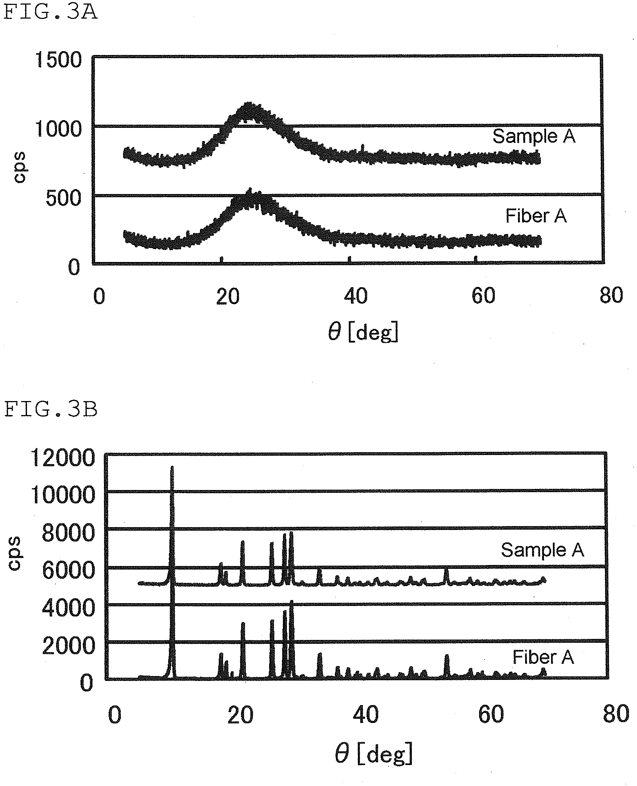

(2) For Sample A and Fiber A, an XRD measurement was conducted. The results are shown in FIG. 3A. Further, after heating at 1400°C for 8 hours, Sample A and Fiber A were subjected to an XRD measurement, whereby a crystal phase was confirmed. The results are shown in FIG. 3B. As is understood from FIGs. 3A and B, Sample A and Fiber A had almost same crystal peak and intensity, revealing that there was no difference in crystal phase.

**Table 2**

| | Composition ratio [wt%] | | | | | | Volume shrinkage [%] | Elution amount [mg/g] | Alumina reactivity |
|---|---|---|---|---|---|---|---|---|---|
| | SiO₂ | Al₂O₃ | MgO | CaO | Fe₂O₃ | Total | 1400°C-8h | pH4.5 | 1400°C-8h |
| Sample A | 44.35 | 40.45 | 15.15 | 0.00 | 0.04 | 100.00 | 30.5 | 3.0 | None |
| Fiber A | 44.12 | 39.89 | 15.35 | 0.40 | 0.24 | 100.00 | 27.1 | 2.8 | None |

### Experiment 1

(1) Influence of CaO, Na₂O and Fe₂O₃ on a composition mainly of SiO₂, Al₂O₃ and MgO was examined.

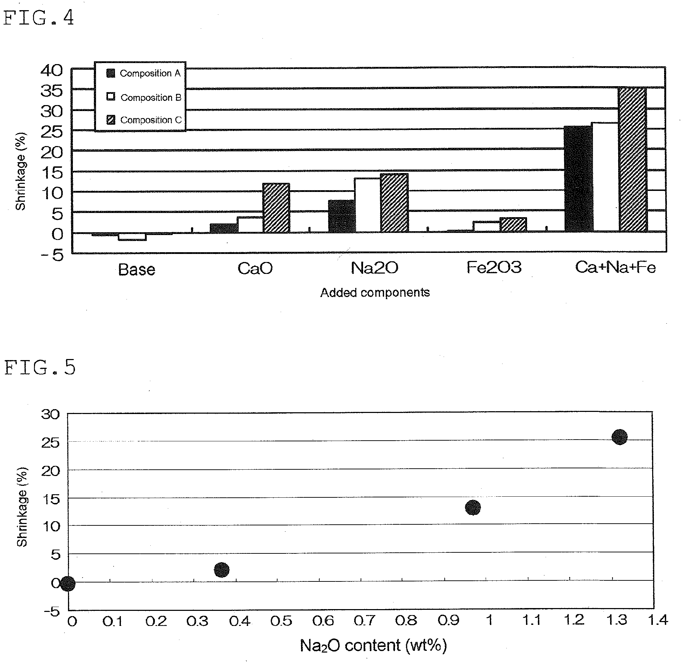

Samples were prepared in the same manner as in Example 1 by using a composition obtained by adding CaO, Na₂O and Fe₂O₃ in amounts shown in Table 4 to SiO₂, Al₂O₃ and MgO of the compositions A, B and C (wt%) in Table 3, and the volume shrinkage (1400°C, 8 hours) was measured. The results are shown in FIG. 4.

**Table 3**

| | | Composition A | Composition B | Composition C |
|---|---|---|---|---|
| Composition ratio (wt%) | SiO₂ | 19.5 | 20.4 | 20.5 |
| | Al₂O₃ | 64.0 | 60.0 | 57.2 |
| | MgO | 16.0 | 19.5 | 22.2 |

**Table 4**

| | | +CaO | +Na₂O | +Fe₂O₃ | +Ca+Na₂O+Fe₂O₃ |
|---|---|---|---|---|---|
| Content (wt%) | Composition A | 0.5 | 0.6 | 0.4 | 1.8 |
| | Composition B | 0.5 | 1.0 | 0.5 | 1.6 |
| | Composition C | 0.6 | 0.8 | 0.7 | 1.6 |

From FIG. 4, it can be understood that the shrinkage was increased by adding CaO, Na₂O and Fe₂O₃. In particular, the shirinkage was increased by addition of Na₂O.

(2) To the composition B shown in Table 3, Na₂O was added while varing the amount thereof (0 to about 1.3 wt%), whereby samples were parepared in the same manner as in Example 1. Then, the volume shrinkage (1400°C, 8 hours) was measured. The results are shown in FIG. 5.

From FIG. 5, it can be understood that the shrinkage increased with an increase in the amount of Na₂O.

### INDUSTRIAL APPLICABILITY

The inorganic fibers of the invention can be used in various applications such as an insulating material or as an alternative of asbestos.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification are incorporated herein by reference in its entirety.

## Claims

1. A composition for inorganic fibers having the following composition ratio and comprising no solvent:
| | |
|---|---|
| SiO₂ | 1.0 to 54.5 wt%; |
| Al₂O₃ | less than 58.0 wt%; |
| MgO | 1.0 to 69.0 wt%; |
| CaO | 6.0 wt% or less; and |
the total of SiO₂, Al₂O₃ and MgO exceeding 94.0 wt%.

2. A method for producing inorganic fibers, wherein the composition for inorganic fibers according to claim 1 that is molten is formed into fibers.

3. Inorganic fibers obtained by the method for producing inorganic fibers according to claim 2.

4. A composition for inorganic fibers having the following composition ratio 1 or composition ratio 2:
[Composition ratio 1]
| | |
|---|---|
| SiO₂ | 1.0 to 21.5 wt%; |
| Al₂O₃ | 24.0 wt% or more and less than 58.0 wt%; |
| MgO | 1.0 to 57.0 wt%; and |
| CaO | less than 7.4 wt% |
[Composition ratio 2]
| | |
|---|---|
| SiO₂ | 1.0 to 22.0 wt%; |
| Al₂O₃ | 58.0 wt% or more and 79.0 wt% or less; |
| MgO | 19.2 to 41.0 wt%; and |
| CaO | less than 7.4 wt% |

5. The composition for inorganic fibers according to claim 4, wherein the total of SiO₂, Al₂O₃ and MgO is 85 wt% or more.

6. A composition for inorganic fibers having the following composition ratio 3 or composition ratio 4:
[Composition ratio 3]
| | |
|---|---|
| SiO₂ | 1.0 to 54.5 wt%; |
| Al₂O₃ | less than 58.0 wt%; |
| MgO | 3.0 to 69.0 wt%; |
| CaO | 6.0 wt% or less; and |
the total of SiO₂, Al₂O₃ and MgO exceeding 94.0 wt%.
[Composition ratio 4]
| | |
|---|---|
| SiO₂ | 30.0 to 41.0 wt%; |
| Al₂O₃ | 58.0 to 69.0 wt%; |
| MgO | 1.0 to 12.0 wt%; |
| CaO | 6.0 wt% or less; and |
the total of SiO₂, Al₂O₃ and MgO exceeding 94.0 wt%.

7. The composition for inorganic fibers according to claim 6, wherein, in composition ratio 3, SiO₂, Al₂O₃ and MgO are included in the following amounts:
| | |
|---|---|
| SiO₂ | 14.0 to 51.0 wt%; |
| Al₂O₃ | 0.0 to 39.0 wt%; and |
| MgO | 42.0 to 59.0 wt% |

8. The composition for inorganic fibers according to claim 6, wherein, in composition ratio 3, SiO₂, Al₂O₃ and MgO are included in the following amounts:
| | |
|---|---|
| SiO₂ | 39.0 to 54.5 wt%; |
| Al₂O₃ | 28.0 to 48.0 wt%; and |
| MgO | 3.0 to 23.0 wt% |

9. The composition for inorganic fibers according to any of claims 1 and 4 to 8, wherein Na₂O is included in an amount of 2.0 wt% or less.

10. Inorganic fibers obtained from the composition for inorganic fibers according to any of claims 4 to 9.

11. A shaped product or an unshaped product obtained by using the inorganic fibers according to claim 3 or 10.
